# EUROPÄISCHE PATENTSCHRIFT

(11) **EP 4 119 915 B1**
(45) Veröffentlichungstag und Bekanntmachung des Hinweises auf die Patenterteilung: **30.10.2024**
(21) Anmeldenummer: 22178966.2
(22) Anmeldetag: 14.06.2022
(51) Int. Cl.: G01L 5/24, G01L 25/00

(54) **SIMULATIONSEINRICHTUNG FÜR DIE SCHRAUBFALLSIMULATION EINES SCHRAUBWERKZEUGES**
SIMULATION DEVICE FOR SIMULATING THE SCREW APPLICATION OF A SCREWING TOOL
DISPOSITIF DE SIMULATION POUR LA SIMULATION D'ASSEMBLAGE VISSÉ D'UN OUTIL DE VISSAGE

(30) Priorität: 14.07.2021 EP 21185633
(43) Veröffentlichungstag der Anmeldung: 18.01.2023
(73) Patentinhaber: Kistler Holding AG, 8408 Winterthur (CH)
(72) Erfinder: Maenz, Benjamin, 58332 Schwelm (DE); Neumann, Gerald, 42499 Hückeswagen (DE); Schneider, Jochen, 73614 Schorndorf (DE)

(56) Entgegenhaltungen:
- WO-A1-2016/103147
- CN-A- 112 556 922
- US-A- 5 886 246

## Beschreibung

### Technisches Gebiet

Die Erfindung betrifft eine Simulationseinrichtung für die Schraubfallsimulation eines Schraubwerkzeuges nach dem Oberbegriff des unabhängigen Anspruches. Die Erfindung betrifft auch ein Verfahren zur Durchführung der Schraubfallsimulation eines Schraubwerkzeuges unter Verwendung der Simulationseinrichtung nach dem Oberbegriff des unabhängigen Anspruches.

### Stand der Technik

Ein Schraubwerkzeug ist gemäss Richtlinie VDI/VDE 2647 vom Februar 2013 sowohl ein motorisch betriebenes Schraubwerkzeug als auch ein handbetätigter Drehmomentschlüssel. Das Schraubwerkzeug ist aktivierbar und das aktivierte Schraubwerkzeug dreht um eine Drehachse und übt dabei ein Drehmoment auf ein Verbindungselement aus.

Das Verbindungselement weist ein Gewinde auf und ist eine Schraube, eine Mutter, usw. Das Verbindungselement dient der Verbindung von Bauteilen. Die Verbindung erfolgt durch eine Klemmkraft zwischen den Bauteilen. Die Klemmkraft gewährleistet den Einsatz der Bauteile unter maximalen Betriebskräften.

Das vom aktivierten Schraubwerkzeug ausgeübte Drehmoment dient also der Erzeugung der Klemmkraft. Dazu steigert das Schraubwerkzeug das ausgeübte Drehmoment mit der Zeit und/oder er steigert das ausgeübte Drehmoment über den Drehwinkel. Der Anstieg des ausgeübte Drehmomentes erfolgt bis zu einem klemmkraftspezifischen Solldrehmoment und/oder bis zu einem klemmkraftspezifischen Solldrehwinkel. Das Solldrehmoment und/oder der Solldrehwinkel ist/sind vordefiniert und am Schraubwerkzeug einstellbar. Das Solldrehmoment und/oder der Solldrehwinkel wird/werden nachfolgend auch die Sollgrösse genannt.

Das Schraubwerkzeug ist mit einer Signalisierung ausgerüstet. Sobald die eingestellte Sollgrösse erreicht ist, deaktiviert das Schraubwerkzeug die Ausübung des Drehmomentes. Die Signalisierung kann nach unterschiedlichen Funktionsprinzipien arbeiten. So bricht ein Knickschlüssel die Ausübung des Drehmomentes bei Erreichen der Sollgrösse automatisch ab. Ein Knackschlüssel löst bei Erreichen der Sollgrösse automatisch ein akustisches- oder optisches Signal aus. Ein anzeigendes Schraubwerkzeug zeigt das aktuell ausgeübte Drehmoment und/oder den aktuellen Solldrehwinkel auf einer Skala oder einem elektronischem Bildschirm an.

Solch ein Schraubwerkzeug wird in vielen industriellen Fertigungsprozessen eingesetzt. Um sicherzustellen, dass das Schraubwerkzeug auch tatsächlich die eingestellte Sollgrösse erzeugt, wird die Leistungsfähigkeit des Schraubwerkzeuges in zeitlichen Abständen geprüft.

Dazu legt die Richtlinie VDI/VDE 2647 vom Februar 2013 fest, was und wie geprüft werden soll. Die Prüfung der Leistungsfähigkeit des Schraubwerkzeuges wird Schraubfallsimulation genannt. Die Schraubfallsimulation erfolgt unter Verwendung einer Simulationseinrichtung, welche ein Prüfverbindungselement, eine Bremseinheit und eine Messeinheit aufweist. Über das Prüfverbindungselement kuppelt das Schraubwerkzeug mit der Simulationseinrichtung. Das Prüfverbindungselement ist um eine Drehachse drehbar. Die Bremseinheit und das Prüfverbindungselement sind mechanisch miteinander verbunden. Die Messeinheit ist zwischen dem Prüfverbindungsmittel und der Bremseinheit angeordnet. Die Messeinheit weist einen Drehmomentaufnehmer und einen Drehwinkelaufnehmer auf.

Das mit der Simulationseinrichtung gekuppelte Schraubwerkzeug wird aktiviert und übt ein Drehmoment auf das Prüfverbindungselement aus. Durch das ausgeübte Drehmoment beginnt sich das Prüfverbindungselement um die Drehachse zu drehen. Die Bremseinheit wird aktiviert und bremst das Prüfverbindungselement. Der Drehmomentaufnehmer misst das Drehmoment und der Drehwinkelaufnehmer misst den Drehwinkel, um den sich das Prüfverbindungselement um die Drehachse dreht.

Eine solche Simulationseinrichtung ist aus der Schrift WO2016/103150A1 bekannt. Die Bremseinheit weist eine Bremsscheibe und Bremsklötze auf. Die Bremsscheibe ist mechanisch mit dem Prüfverbindungselement verbunden, die Bremsklötze sind ortsfest angeordnet. Die Bremseinheit funktioniert hydraulisch und weist eine Hydraulikpumpe und Bremskolben auf. Die Hydraulikpumpe beaufschlagt die Bremskolben mit einer Bremsflüssigkeit, die beaufschlagten Bremskolben wirken im Reibschluss auf die Bremsscheibe und bremst das Prüfverbindungselement.
Die Simulationseinrichtung für die Schraubfallsimulation der Schrift WO2016/103150A1 ist auch als Schrift WO2016/103147A1 veröffentlicht.
Auch die Schrift US5886246A1 offenbart eine Simulationseinrichtung für die Schraubfallsimulation. Im Unterschied zur Lehre der beiden Schrift WO2016/103147A1 und WO2016/103150A1 ist die Bremseinheit der Schrift US5886246A1 ein Elektromotor.
Die Schrift CN112556922A1 bezieht sich auf eine weitere eine Simulationseinrichtung für die Schraubfallsimulation, wo ein mit der Simulationseinrichtung gekuppeltes und aktiviertes Schraubwerkzeug ein am Schraubwerkzeug eingestelltes Drehmoment auf ein Prüfverbindungselement ausübt und sich das Prüfverbindungselement dadurch um eine Drehachse dreht. Das sich drehende Prüfverbindungselement wirkt mit einer Spindel und mit einer an der Spindel befestigten Mutter zusammen, um ein Tellerpaket zu beaufschlagen. Ein Drehmomentaufnehmer misst das vom Schraubwerkzeug ausgeübte Drehmoment. Um das Schraubwerkzeug wieder vom Prüfverbindungselement zu entkuppeln, wird das Schraubwerkzeug deaktiviert und vom Tellerpaket abgebremst.

Eine solche hydraulische Bremseinheit ist teuer in der Anschaffung und teuer im Unterhalt, weshalb dann auch die Simulationseinrichtung teuer ist.

Aufgabe der vorliegenden Erfindung ist es, eine kostengünstige Simulationseinrichtung für die Schraubfallsimulation eines Schraubwerkzeuges bereitzustellen.

### Darstellung der Erfindung

Die Aufgabe wird durch die kennzeichnenden Merkmale des unabhängigen Anspruches gelöst.

Die Erfindung betrifft eine Simulationseinrichtung für die Schraubfallsimulation eines Schraubwerkzeuges so wie in Anspruch 1 definiert.

Die Erfindung betrifft auch ein Verfahren zur Durchführung der Schraubfallsimulation eines Schraubwerkzeuges so wie in Anspruch 8 definiert.

Im Unterschied zum Stand der Technik aus der Schrift WO2016/103150A1, benötigt die erfindungsgemässe Simulationseinrichtung somit keine hydraulische Bremseinheit mehr, was kostengünstig ist. Vielmehr wird das vom Schraubwerkzeug ausgeübte Drehmoment von einer Wandlereinheit aufgenommen und in eine Bremskraft gewandelt. Mit dieser Bremskraft wird die Bremseinheit beaufschlagt.

Weitere Ausbildungen des Erfindungsgegenstandes werden in den abhängigen Ansprüchen beansprucht.

### Kurze Beschreibung der Figuren

Im Folgenden wird die Erfindung beispielhaft anhand einer bevorzugten Ausführungsform unter Beizug der Figuren näher erklärt. Es zeigen
- Fig. 1: einen Längsschnitt durch die Simulationseinrichtung 1 mit gekuppeltem Schraubwerkzeug 2;
- Fig. 2: der Längsschnitt nach Fig. 1 mit aktiviertem Schraubwerkzeug 2 und aktivierter Halteeinheit 15;
- Fig. 2a: ein vergrösserter Ausschnitt der nichtaktivierten Halteeinheit 15 nach Fig. 1, 5 und 6;
- Fig. 2b: ein vergrösserter Ausschnitt der aktivierten Halteeinheit 15 nach Fig. 2 bis 4;
- Fig. 3: der Längsschnitt nach Fig. 2 mit an der Bremseinheit 12 mechanisch kontaktierter Wandlereinheit 14;
- Fig. 3a: ein vergrösserter Ausschnitt der nicht an der Bremseinheit 12 mechanisch kontaktierten Wandlereinheit 14 nach Fig. 1, 2 und 6;
- Fig. 3b: ein vergrösserter Ausschnitt der an der Bremseinheit 12 mechanisch kontaktierten Wandlereinheit 14 nach Fig. 3 bis 5;
- Fig. 4: der Längsschnitt nach Fig. 3 mit durch die Wandlereinheit 14 komprimierten Bremsfederelementen 12.3 der Bremseinheit 12;
- Fig. 4a: ein vergrösserter Ausschnitt der nicht komprimierten Bremsfederelemente 12.3 der Bremseinheit 12 nach Fig. 1 bis 3 und 6;
- Fig. 4b: ein vergrösserter Ausschnitt der komprimierten Bremsfederelemente 12.3 der Bremseinheit 12 nach Fig. 4 und 5;
- Fig. 5: der Längsschnitt nach Fig. 4 mit entkuppeltem Schraubwerkzeug 2; und
- Fig. 6: der Längsschnitt nach Fig. 5 mit deaktivierter Halteeinheit 15.

Gleiche Bezugszeichen bezeichnen in den Figuren gleiche Gegenstände.

### Wege zur Ausführung der Erfindung

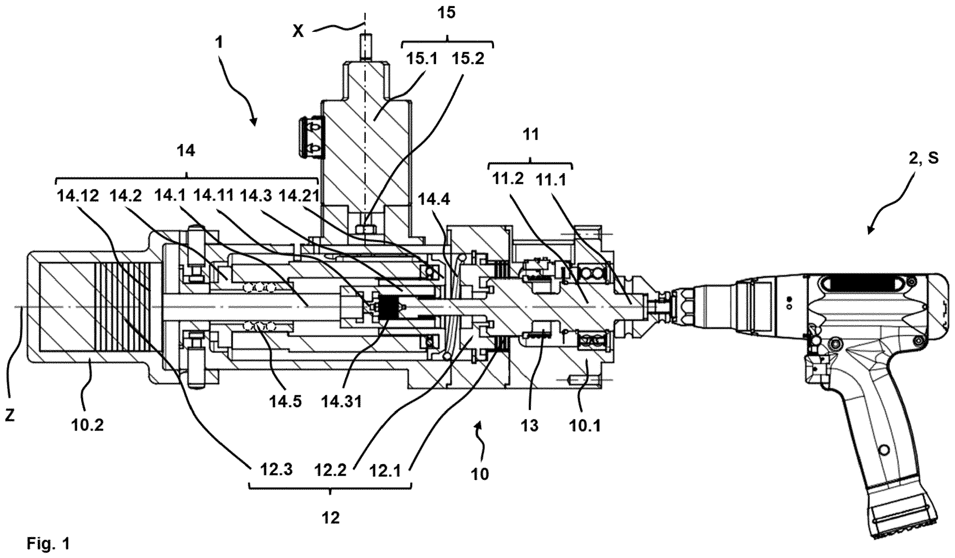

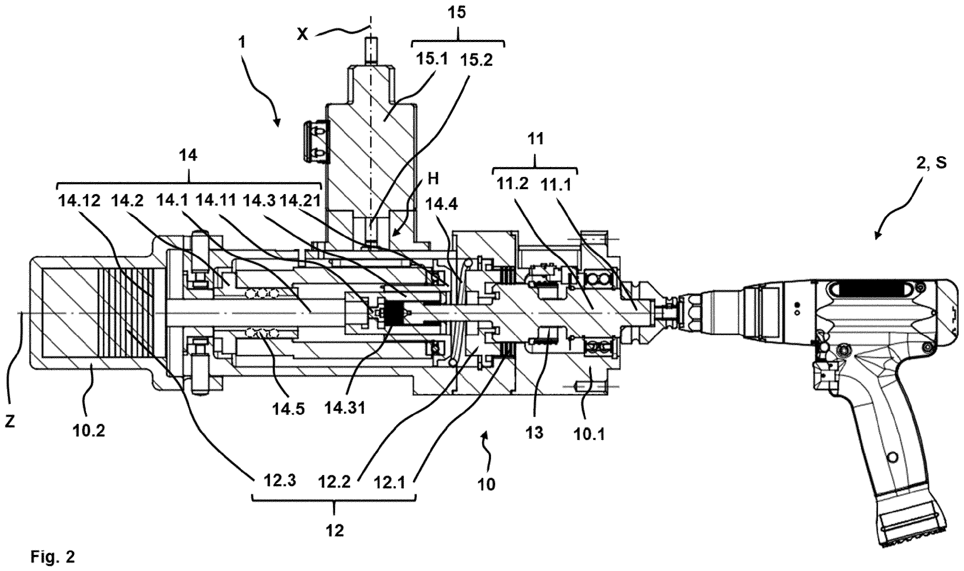

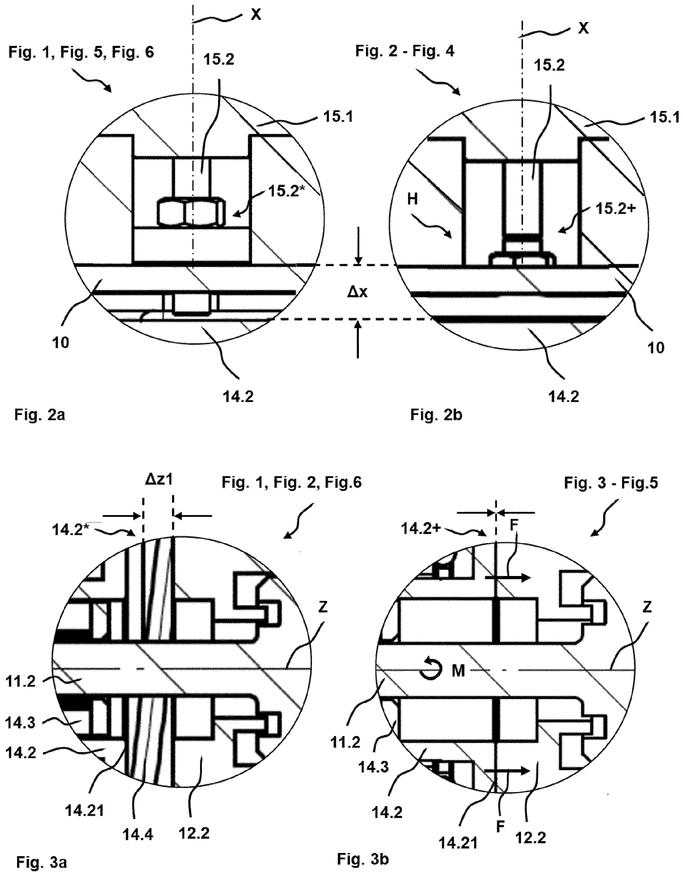

Die Fig. 1 bis 6 zeigen einen Längsschnitt durch eine bevorzugte Ausführungsform der Simulationseinrichtung 1 für die Schraubfallsimulation eines Schraubwerkzeuges 2. Der Längsschnitt erfolgt längs einer Drehachse Z. Die Fig. 2a, 2b, 3a, 3b, 4a und 4d zeigen vergrösserte Ausschnitte der Fig. 1 bis 6.

Das Schraubwerkzeug 2 ist gemäss Richtlinie VDI/VDE 2647 vom Februar 2013 ein motorisch betriebenes Schraubwerkzeug oder ein handbetätigter Drehmomentschlüssel. Das Schraubwerkzeug 2 ist aktivierbar und das aktivierte Schraubwerkzeug 2 dreht je nach Schraubfall kontinuierlich und/oder diskontinuierlich um die Drehachse Z und übt dabei ein Drehmoment M aus.

Während der Schraubfallsimulation steigert das Schraubwerkzeug 2 das ausgeübte Drehmoment M mit der Zeit und/oder es steigert das ausgeübte Drehmoment M über den Drehwinkel. Der Anstieg des ausgeübte Drehmomentes M erfolgt bis zu einem Solldrehmoment und/oder bis zu einem Solldrehwinkel. Das Solldrehmoment und/oder der Solldrehwinkel ist/sind vordefiniert und am Schraubwerkzeug 2 einstellbar. Das Solldrehmoment und/oder der Solldrehwinkel wird/werden nachfolgend auch die Sollgrösse S genannt.

Das Schraubwerkzeug 2 ist mit einer Signalisierung ausgerüstet. Sobald bei der Schraubfallsimulation die eingestellte Sollgrösse S erreicht ist, deaktiviert das Schraubwerkzeug 2 die Ausübung des Drehmomentes M. Die Signalisierung kann nach unterschiedlichen Funktionsprinzipien arbeiten. Das Schraubwerkzeug 2 kann ein Knickschlüssel sein, welcher Knickschlüssel bei Erreichen des Solldrehmomentes automatisch abknickt. Das Schraubwerkzeug 2 kann ein Knackschlüssel sein, welcher Knackschlüssel bei Erreichen des Solldrehmomentes automatisch ein akustisches- oder optisches Signal auslöst. Das Schraubwerkzeug 2 kann ein anzeigendes Schraubwerkzeug sein, welches anzeigende Schraubwerkzeug auf einer Skala oder einem elektronischem Bildschirm das ausgeübte Drehmoment M anzeigt.

Die wesentlichen Bestandteile der Simulationsvorrichtung 1 sind eine Prüfverbindungeinheit 11, eine Bremseinheit 12, eine Messeinheit 13, eine Wandlereinheit 14 und eine Halteeinheit 15.

Die Simulationseinrichtung 1 weist ein Gehäuse 10 auf. Das Gehäuse 10 ist mehrteilig, mit einem Gehäuseoberteil 10.1 und einem Gehäuseboden 10.2. Am Gehäuseoberteil 10.1 befindet sich ein schraubwerkzeugnahes Gehäuseende, am Gehäuseboden 10.2 befindet sich ein schraubwerkzeugfernes Gehäuseende. Das Gehäuse 10 ist hohlzylinderförmig und erstreckt sich längs der Drehachse Z. Das Gehäuse 10 weist einen Hohlraum auf. Der Hohlraum erstreckt sich vom Gehäuseoberteil 10.1 bis zum Gehäuseboden 10.2. Das Gehäuse 10 hat mehrere Funktionen, so schützt es die wesentlichen Bestandteile der Simulationsvorrichtung 1 vor mechanischer Beschädigung, auch bietet es der Simulationsvorrichtung 1 während der Schraubfallsimulation mechanische Stabilität gegen Durchbiegung längs der Drehachse Z und Verdrehung um die Drehachse Z.

Die Prüfverbindungseinheit 11 hat die Funktion, für die Schraubfallsimulation eine Kuppelung des Schraubwerkzeuges 2 mit der Simulationseinrichtung 1 zu ermöglichen. Die Prüfverbindungseinheit 11 ist zylinderförmig und erstreckt sich längs der Drehachse Z. Die Prüfverbindungseinheit 11 weist ein Prüfverbindungselement 11.1 und einen Drehkörper 11.2 auf. Vorzugsweise sind das Prüfverbindungselement 11.1 und der Drehkörper 11.2 einstückig gefertigt. Das Prüfverbindungselement 11.1 ist am schraubwerkzeugnahen Gehäuseende des Gehäuseoberteils 10.1 angeordnet. Das Prüfverbindungselement 11.1 ist durch eine Öffnung im Gehäuseoberteil 10.1 von aussen zugänglich. Das Prüfverbindungselement 11.1 ist genormt und beispielsweise ein Vierkant. Über das Prüfverbindungselement 11.1 kuppelt das Schraubwerkzeug 2 mit der Simulationseinrichtung 1. Die Kupplung ist lösbar. Der Drehkörper 11.2 ist im Hohlraum des Gehäuseoberteiles 10.1 drehbar gelagert angeordnet.

Die Bremseinheit 12 ist im Hohlraum des Gehäuseoberteiles 10.1 angeordnet. Die Bremseinheit 12 weist mehrere Bremslamellenelemente 12.1, einen Bremskolben 12.2 und mehrere Bremsfederelemente 12.3 auf. Die Bremseinheit 12 hat die Funktion, das während der Schraubfallsimulation vom Schraubwerkzeug 2 ausgeübte Drehmoment M abzubremsen.

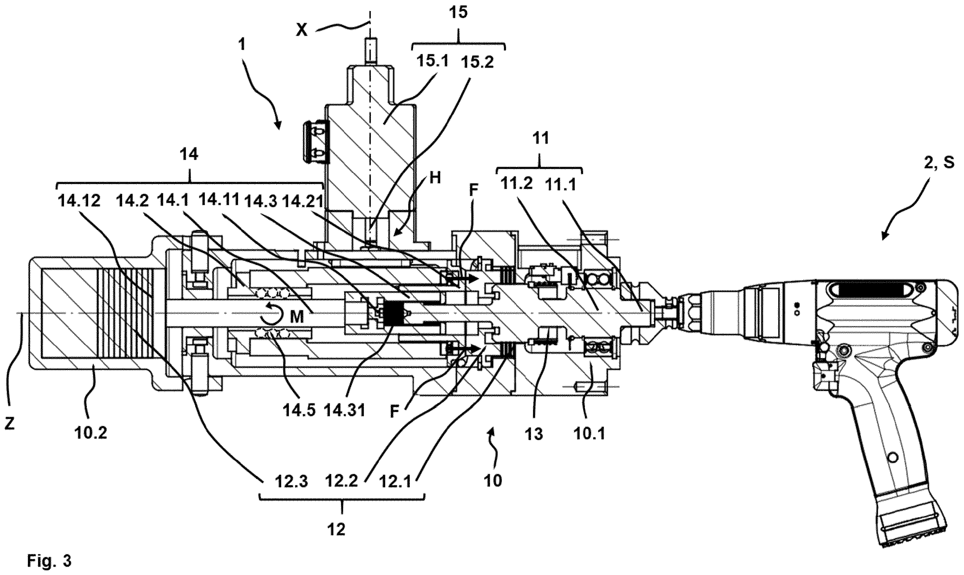

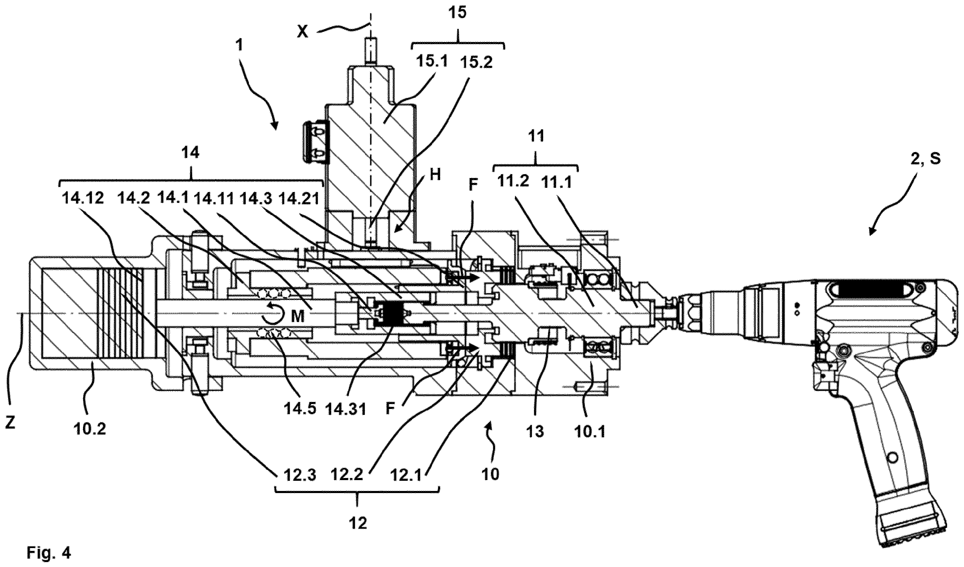

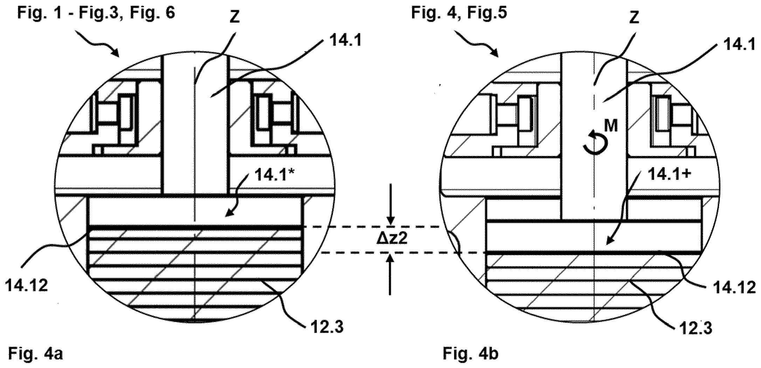

Längs der Drehachse Z, sind die Bremslamellenelemente 12.1 näher am Schraubwerkzeug 2 angeordnet und der Bremskolben 12.2 ist weiter vom Schraubwerkzeug 2 entfernt angeordnet. Vorzugsweise weisen die Bremslamellenelemente 12.1 mehrere am Gehäuseoberteil 10.1 befestigte erste Bremslamellenelemente und mehrere am Drehkörper 11.2 befestigte zweite Bremslamellenelemente auf. Die Bremslamellenelemente 12.1 sind ringförmig. Längs der Drehachse Z sind sie zueinander alternierend angeordnet. Der Bremskolben 12.2 ist am Gehäuseoberteil 10.1 angeordnet. Der Bremskolben 12.2 weist ein schraubwerkzeugfernes Ende und ein schraubwerkzeugnahes Ende auf. Mit dem schraubwerkzeugnahen Ende ist der Bremskolben 12.2 im direkten mechanischen Kontakt mit den Bremslamellenelementen 12.1. Über das schraubwerkzeugferne Ende ist der Bremskolben 12.2 mit einer Bremskraft F beaufschlagbar (siehe Fig. 3 und 4). Der mit der Bremskraft F beaufschlagte Bremskolben 12.2 ist längs der Drehachse Z in Richtung hin zum Schraubwerkzeug 2 beweglich. Der mit der Bremskraft F beaufschlagte Bremskolben 12.2 bringt die Bremslamellenelemente 12.1 zu einer reibschlüssigen Anlage. Die reibschlüssig aneinander anliegenden Bremslamellenelemente 12.1 bremsen das vom Schraubwerkzeug 2 ausgeübte Drehmoment M ab.

Die Bremsfederelemente 12.3 sind am schraubwerkzeugfernen Gehäusende im Hohlraum des Gehäusetopfes 10.2 angeordnet. Die Bremsfederelemente 12.3 sind im Gehäusetopf 12.2 befestigt. Vorzugsweise sind die Bremsfederelemente 12.3 Tellerfedern. Die Bremsfederelemente 12.3 sind längs der Drehachse Z komprimierbar. In Abhängigkeit der Sollgrösse S (Solldrehmoment und/oder Solldrehwinkel) werden unterschiedliche viele Bremsfederelemente 12.3 und/oder unterschiedlich steife Bremsfederelemente 12.3 im Gehäusetopf 10.2 angeordnet. Für einen raschen und einfachen Wechsel der Bremsfederelemente 12.3 weist der Gehäusetopf 10.2 einen Schnellverschluss wie einen Bajonettverschluss, usw. auf.

Die Messeinheit 13 ist im Hohlraum des Gehäuseoberteiles 10.1 angeordnet. Die Messeinheit 13 weist einen Drehmomentaufnehmer und einen Drehwinkelaufnehmer auf. Der Drehmomentaufnehmer hat die Funktion, das vom Schraubwerkzeug 2 während der Schraubfallsimulation ausgeübte Drehmoment M zu messen. Der Drehmomentaufnehmer ist am Drehkörper 11.2 befestigt. Vorzugsweise ist der Drehmomentaufnehmer ein Dehnungsmessstreifen. Der Dehnungsmessstreifen erfasst eine vom Drehmoment M verursachte Dehnung oder Stauchung des Drehkörpers 11.2. Der Drehwinkelaufnehmer hat die Funktion, den Drehwinkel um den sich die Prüfverbindungseinheit 11 während der Schraubfallsimulation um die Drehachse Z dreht, zu messen. Der Drehwinkelaufnehmer umfasst ein Sensorelement und eine Messscheibe. Das Sensorelement ist am Gehäuseoberteil 10.1 befestigt, die Messscheibe ist am Drehkörper 11.2 befestigt. Vorzugsweise weist die Messscheibe Winkelmarken auf und das Sensorelement erfasst die sich während der Schraubfallsimulation um die Drehachse Z drehenden Winkelmarken.

Die Wandlereinheit 14 ist zu einem grossen Teil im Hohlraum des Gehäuseoberteiles 10.1 zu einem geringen Teil im Hohlraum des Gehäusetopfes 10.2 angeordnet. Die Wandlereinheit 14 weist eine Spindel 14.1, eine Mutter 14.2, eine Buchse 14.3 und ein Rückstellfederelement 14.4 auf. Die Wandlereinheit 14 ist am Prüfverbindungseinheit 11 befestigt. Die Funktion der Wandlereinheit 14 ist es, das vom Schraubwerkzeug 2 während der Schraubfallsimulation ausgeübte Drehmoment M aufzunehmen und in eine Bremskraft F zu wandeln und mit der Bremskraft F die Bremseinheit 12 zu beaufschlagen.

Die Spindel 14.1 ist zylinderförmig und erstreckt sich längs der Drehachse Z. Die Mutter 14.2 ist hohlzylinderförmig und ist auf dem Umfang der Spindel 14.1 angeordnet. In einer Ebene senkrecht zur Drehachse Z umschliesst die Mutter 14.1 den Umfang der Spindel 14.1 vollständig. Spindel 14.1 und Mutter 14.2 sind über einen Formschluss miteinander verbunden. Der Formschluss überträgt eine Drehbewegung der Spindel 14.1 um die Drehachse Z in eine Längsbewegung der Mutter 14.2 entlang der Drehachse Z. Vorzugsweise bilden die Spindel 14.1 und die Mutter 14.2 einen Kugelgewindetrieb, einen Rollengewindetrieb, usw. Die Spindel 14.1 ist dann eine Gewindespindel und die Mutter 14.2 ist dann eine Gewindemutter. Dabei bilden Wälzelemente 14.5 wie Kugeln oder Rollen den Formschluss zwischen der Gewindespindel und der Gewindemutter. In Fig. 1 bis 6 sind die Wälzelemente 14.5 schematisch als gestrichelte Kreise eingezeichnet. Die Gewindespindel weist auf ihrem Umfang eine Laufbahn auf. Die Gewindemutter weist eine Rückführung auf. Die Wälzelemente 14.5 bewegen sich in der Laufbahn der Gewindespindel und in der Rückführung der Gewindemutter. Die Wälzelemente 14.5 übertragen eine Drehbewegung der Gewindespindel um die Drehachse Z in eine Bewegung der Gewindemutter längs der Drehachse Z. Durch die sehr geringe Rollreibung der Wälzelemente 14.5 weist der Kugelgewindetrieb oder der Rollengewindetrieb keine Selbsthemmung auf.

Die Buchse 14.3 ist über eine mechanische Verbindung 14.31 mit dem Drehkörper 11.2 verbunden. Die mechanische Verbindung 14.31 überträgt das vom Schraubwerkzeug 2 ausgeübte Drehmoment M vom Drehkörper 11.2 auf die Buchse 14.3. Vorzugsweise ist die mechanische Verbindung 14.31 eine Verzahnung, bei der die Buchse 14.3 und der Drehkörper 11.2 mit Zacken versehen sind, welche Zacken ineinandergreifen und die Verzahnung bilden.

Die Spindel 14.1 weist längs der Drehachse Z ein schraubwerkzeugnahes Ende auf. Am schraubwerkzeugnahen Ende ist die Spindel 14.1 über eine weitere mechanische Verbindung 14.11 an der Buchse 14.3 befestigt. Die weitere mechanische Verbindung 14.11 überträgt das vom Schraubwerkzeug 2 ausgeübte Drehmoment M von der Buchse 14.3 auf die Spindel 14.1. Vorzugsweise ist die weitere mechanische Verbindung 14.11 über eine Passfeder-Schraube-Verbindung. Dabei verbindet die Schraube die Spindel 14.1 und die Buchse 14.3 miteinander und die Passfeder sichert diese Verbindung. Die Schraube weist ein Gewinde mit einer Gewindesteigung auf. Unter der Wirkung des vom Schraubwerkzeug 2 ausgeübten Drehmomentes M und in Abhängigkeit der Gewindesteigung ist die Schraube längs der Drehachse Z beweglich und resultiert in einer Längsbewegung der Buchse 14.3 in Richtung weg vom Schraubwerkzeug 2 von kleiner/gleich 10mm.

Das Rückstellfederelement 14.4 ist am Gehäuseoberteil 10.1 angeordnet. Vorzugsweise kontaktiert ein schraubwerkzeugnahes Ende des Rückstellfederelementes 14.4 mechanisch das Gehäuseoberteil 10.1, während ein schraubwerkzeugfernes Ende des Rückstellfederelementes 14.4 mechanisch die Mutter 14.2 kontaktiert.

Längs der Drehachse Z, ist die Mutter 14.2 weiter vom Schraubwerkzeug 2 entfernt angeordnet als das Rückstellfederelement 14.4 und der Bremskolben 12.2. Die Mutter 14.2 weist an ihrem schraubwerkzeugnahen Ende ein Lager und eine Druckhülse 14.21 auf. Das Lager dient dazu, dass die Mutter 14.1 bei der über die Wälzelemente 14.5 vermittelten Bewegung längs der Drehachse Z nicht verkantet. Über die Druckhülse 14.21 ist die Mutter 14.2 im mechanischen Kontakt mit dem Rückstellfederelement 14.4 und mit dem Bremskolben 12.2. Dazu weist die Druckhülse 14.21 eine sich in einer Ebene senkrecht zur Drehachse Z erstreckende Kontaktfläche auf. Der mechanische Kontakt erfolgt sowohl mit dem Rückstellfederelement 14.4 als auch mit dem Bremskolben 12.2.

Die Halteeinheit 15 ist am Gehäuse 10 angeordnet. Die Halteeinheit 15 weist einen Antrieb 15.1 und ein Halteelement 15.2 auf. Die Halteeinheit 15 hat die Funktion, die Mutter 14.2 für eine gerichtete Bewegung längs der Drehachse Z in Richtung hin zum Schraubwerkzeug 2 zu halten.

Der Antrieb 15.1 ist aussenseitig am Gehäuseoberteil 10.1 befestigt. Vorzugsweise ist der Antrieb 15.1 ein Hubmagnet. Antrieb 15.1 und Halteelement 15.2 sind mechanisch miteinander verbunden. Antrieb 15.1 und Halteelement 15.2 erstrecken sich längs einer Radialachse X. Die Radialachse X steht senkrecht auf der Drehachse Z. Das Halteelement 15.2 ragt durch eine aussenseitige Öffnung des Gehäuses 10 in den Hohlraum des Gehäuses 10. Das Halteelement 15.2 weist vorzugsweise eine Passfeder auf.

Die Halteeinheit 15 ist aktivierbar und deaktivierbar. Bei aktivierter Halteeinheit 15 bewegt der Antrieb 15.1 das Halteelement 15.2 zwischen einer Ruhestellung 15.2* und einer Haltestellung 15.2+. Nach Fig. 2a nimmt das Halteelement 15.2 die Ruhestellung 15.2* ein. Nach Fig. 2b hat der Antrieb 15.1 das Halteelement 15.2 über einen Stellweg Δx längs der Radialachse X gegen die Mutter 14.2 bewegt. Das Halteelement 15.2 nimmt nun eine Haltestellung 15.2+ ein. In der Haltestellung 15.2+ ist das Halteelement 15.2 in einem direkten mechanischen Kontakt mit der Mutter 14.2. Vorzugsweise ist der Stellweg Δx längs der Radialachse X kleiner/gleich 10mm. Das in der Haltestellung 15.2+ mit der Mutter 14.2 mechanisch kontaktierte Halteelement 15.2 hält die Mutter 14.2 formschlüssig (siehe Fig. 2 bis 4).

Bei einer Drehbewegung der Spindel 14.1 um der Drehachse Z verhindert der formschlüssige Halt H eine Bewegung der Mutter 14.2 längs der Drehachse Z in Richtung weg vom Schraubwerkzeug 2. Der formschlüssige Halt H lässt jedoch eine Bewegung der Mutter 14.2 längs der Drehachse Z in Richtung hin zum Schraubwerkzeug 2 zu. Nach Fig. 3a nimmt die Mutter 14.2 eine Mutterausgangsstellung 14.2* ein. Aus der Mutterausgangsstellung 14.2* heraus kann die Mutter 14.2 einen Mutterhub Δz1 längs der Drehachse Z von vorzugsweise kleiner/gleich 25mm in Richtung hin zum Schraubwerkzeug 2 zurücklegen. Die Bewegung der Mutter 14.2 längs der Drehachse Z in Richtung hin zum Schraubwerkzeug 2 wird jedoch durch den Bremskolben 12.2 begrenzt. Die Mutter 14.2 legt den Mutterhub Δz1 längs der Drehachse Z zurück und befindet sich dann in einer Mutterendstellung 14.2+ bezüglich des Rückstellfederelementes 14.4 und bezüglich des Bremskolbens 12.2. Die Druckhülse 14.21 komprimiert das Rückstellfederelement 14.4 und beaufschlagt den Bremskolben 12.2 mit einer Bremskraft F.

Die Spindel 14.1 weist längs der Drehachse Z ein schraubwerkzeugfernes Ende auf. Die Spindel 14.1 weist am schraubwerkzeugfernen Ende eine Spindelkontaktfläche 14.12 auf. Über die Spindelkontaktfläche 14.12 ist die Spindel 14.1 im direkten mechanischen Kontakt mit den Bremsfederelementen 12.3. im Gehäusetopf 10.2. Die Spindelkontaktfläche 14.12 erstreckt sich in einer Ebene senkrecht zur Drehachse Z.

Wenn nun die Mutter 14.2 in der Mutterendstellung 14.2+ ist, und das Schraubwerkzeug 2 weiterhin die Spindel 14.1 zu einer Drehbewegung um die Drehachse Z antreibt, werden Mutter 14.2 und Spindel 14.1 mechanisch gegeneinander verspannt. Wie in Fig. 4a und 4b dargestellt, bewegt sich die Buchse 14.3 unter der Wirkung des vom Schraubwerkzeug 2 ausgeübten Drehmomentes M längs der Drehachse Z in Richtung weg vom Schraubwerkzeug 2. Dadurch bewegt sich auch die mit der Buchse 14.3 mechanisch verbundene Spindel 14.1 längs der Drehachse Z in Richtung weg vom Schraubwerkzeug 2. Die Spindelkontaktfläche 14.12 verlässt eine Spindelausgangsstellung 14.1* und bewegt sich längs der Drehachse Z in eine Spindelendstellung 14.1+, was zu einer Kompression der Bremsfederelemente 12.3 führt.

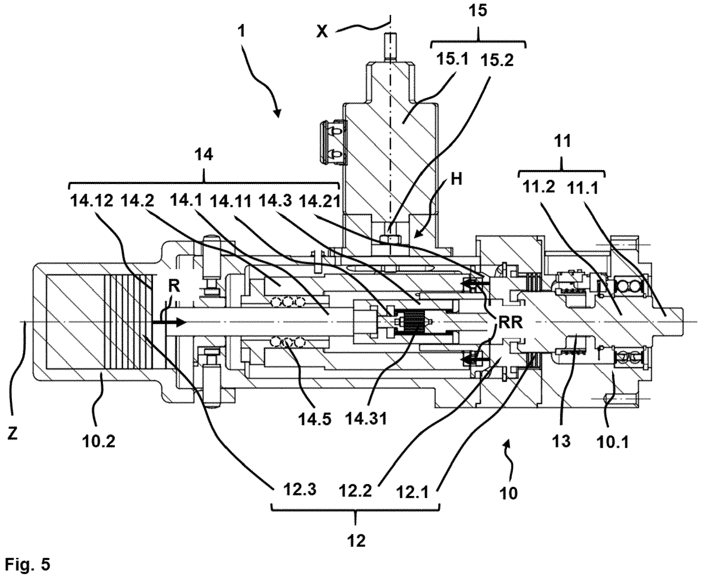

Auch wenn am Ende der Schraubfallsimulation das Schraubwerkzeug 2 kein Drehmoment M mehr ausübt, beaufschlagt die Mutter 14.2 den Bremskolben 12.2 weiterhin mit der Bremskraft F (siehe Fig. 5). Denn die Mutter 14.2 befindet sich noch im formschlüssigen Halt H durch die Halteeinheit 15.

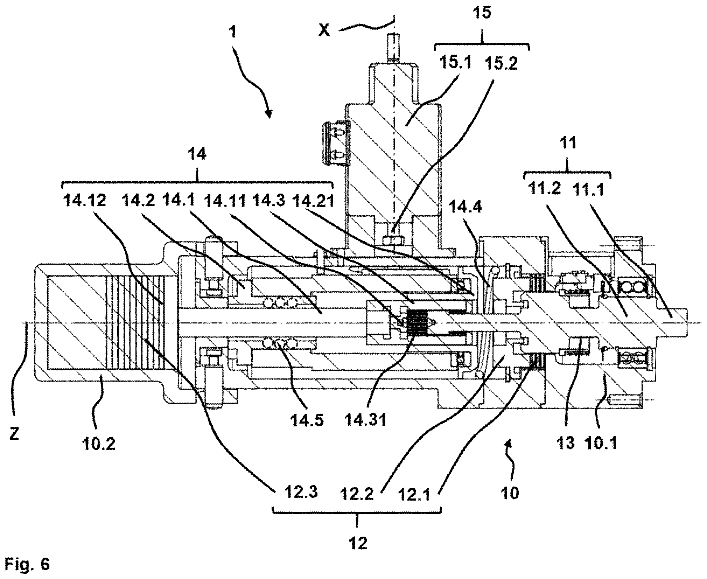

Am Ende der Schraubfallsimulation übt das Schraubwerkzeug 2 kein Drehmoment M mehr aus. Doch erst bei deaktivierter Halteeinheit 15, wo das Halteelement 15.2 vom Antrieb 15.1 aus der Haltestellung 15.2+ zurück in die Ruhestellung 15.2* bewegt ist, befindet sich die Mutter 14.2 nicht mehr im formschlüssigen Halt H. Dann dekomprimieren die Bremsfederelemente 12.3, was in einer Federkraft R resultiert. Die Federkraft R wirkt über die Spindelkontaktfläche 14.12 auf die Spindel 14.1 Die Buchse 14.3 und die Spindel 14.1 bewegen sich längs der Drehachse Z in Richtung hin vom Schraubwerkzeug 2. Die Spindelkontaktfläche 14.12 verlässt die Spindelendstellung 14.1+ und bewegt sich längs der Drehachse Z selbsttätig in die Spindelausgangsstellung 14.1+ (siehe Fig. 5 und 6). Weitere zeitaufwändige Vorkehrungen zur Zurückstellung der Simulationseinrichtung 1 sind somit nicht nötig, was kostengünstig ist.

Ohne den formschlüssigen Halt H dekomprimiert das Rückstellfederelement 14.4 und bewirkt mit einer aus der Dekompression resultierenden Rückstellfederkraft RR, dass die Mutter 14.2 die Mutterendstellung 14.2+ verlässt und selbsttätig wieder die Mutterausgangsstellung 14.2+ einnimmt (siehe Fig. 5 und 6). Vorteilhafterweise ist die Rückstellfederkraft RR so gross gewählt, dass die Mutter 14.2 unter der Wirkung der Rückstellfederkraft RR die Mutterausgangsstellung 14.2+ besonders schnell wieder einnimmt, was zeit- und kostengünstig ist.

Ohne den formschlüssigen Halt H löst sich die reibschlüssige Anlage der Bremslamellenelemente 12.1 und bewegt den Bremskolben 12.2 längs der Drehachse Z von den Bremslamellenelementen 12.1 weg.

Das Verfahren zur Durchführung der Schraubfallsimulation des Schraubwerkzeuges 2 unter Verwendung der Simulationseinrichtung 1 weist nun die folgenden Schritte auf:

In einem ersten Schritt nach Fig. 1 wird am Schraubwerkzeug 2 eine Sollgrösse S eingestellt und das Schraubwerkzeug 2 wird über die Prüfverbindungseinheit 11 mit der Simulationseinrichtung 1 gekuppelt. Das Schraubwerkzeug 2 ist noch nicht aktiviert und dreht sich noch nicht um die Drehachse Z und übt noch kein Drehmoment M aus. Das Halteelement 15.2 nimmt die Ruhestellung 15.2* ein (siehe Fig. 2a). Die Mutter 14.2 ist in der Mutterausgangsstellung 14.2* (siehe Fig. 3a). Die Spindel 14.1 ist in der Spindelausgangsstellung 14.1* (siehe Fig. 4a).

In einem zweiten Schritt nach Fig. 2 wird das Schraubwerkzeug 2 aktiviert. Kurz (innerhalb von 2sec) nach Aktivierung des Schraubwerkzeuges 2 wird die Halteeinheit 15 aktiviert und das Halteelement 15.2 wird vom Antrieb 15.1 in die Haltestellung 15.2+ bewegt und die Mutter 14.2 befindet sich im formschlüssigen Halt H in der Mutterausgangsstellung 14.2* (siehe auch Fig. 2b und 3a). Die Spindel 14.1 ist noch in der Spindelausgangsstellung 14.1* (siehe Fig. 4a).

In einem dritten Schritt nach Fig. 3 dreht sich das aktivierte Schraubwerkzeug 2 um die Drehachse Z und übt ein Drehmoment M aus. Das mit dem Schraubwerkzeug 2 gekuppelte Prüfverbindungselement 11.1 überträgt die Drehbewegung um die Drehachse Z über den Drehkörper 11.2 auf die Buchse 14.3. Über die mechanische Verbindung 14.31 wird das Drehmoment M von der Wandlereinheit 14 aufgenommen. Die Drehbewegung um die Drehachse Z wird von der Buchse 14.3 auf die Spindel 14.1 übertragen. Die Drehbewegung der Spindel 14.1 um die Drehachse Z führt zu einer Bewegung der Mutter 14.2 längs der Drehachse Z. Die Wandlereinheit 14 wandelt das ausgeübte Drehmoment M. Der formschlüssige Halt H der Mutter 14.2 verhindert eine Bewegung der Mutter 14.2 längs der Drehachse Z in Richtung weg vom Schraubwerkzeug 2. Somit führt die Mutter 14.2 eine Bewegung längs der Drehachse Z in Richtung hin zum Schraubwerkzeug 2 aus. Die Mutter 14.2 verlässt die Mutterausgangsstellung 14.1* und bewegt sich längs der Drehachse Z in die Mutterendstellung 14.2+ (siehe Fig. 3a und 3b). Die in die Mutterendstellung 14.2+ bewegte Mutter 14.2 wandelt das ausgeübte Drehmoment M in die Bremskraft F. Die Wandlereinheit 14 wandelt auf diese Weise das ausgeübte Drehmoment M in die Bremskraft F. In der Mutterendstellung 14.2+ komprimiert die Mutter 14.2 das Rückstellfederelement 14.4. In der Mutterendstellung 14.2+ beaufschlagt die Mutter 14.2 den Bremskolben 12.2 mit der Bremskraft F. Die Wandeleinheit 14 beaufschlagt auf diese Weise die Bremseinheit 12 mit der Bremskraft F. Der mit der Bremskraft F beaufschlagte Bremskolben 12.2 ist längs der Drehachse Z beweglich und bringt die Bremslamellenelemente 12.1 zur reibschlüssigen Anlage. Die Bremslamellenelemente 12.1 bremsen das vom Schraubwerkzeug 2 ausgeübte Drehmoment M ab. Die Messeinheit 13 misst das vom Schraubwerkzeug 2 im ausgeübten Drehmomentes M und den Drehwinkel, um den sich die Prüfverbindungseinheit 11 um die Drehachse Z dreht. Das Halteelement 15.2 bleibt in der Haltestellung 15.2+ (siehe Fig. 2b). Die Spindel 14.1 ist noch in der Spindelausgangsstellung 14.1*.

In einem vierten Schritt nach Fig. 4 steigert das Schraubwerkzeug 2 das ausgeübte Drehmoment M weiter bis zum Erreichen der eingestellten Sollgrösse S. Dabei dreht das Schraubwerkzeug 2 die Spindel 14.1 um die Drehachse Z. Da sich die Mutter 14.2 in der Mutterendstellung 14.2+ befindet, werden Mutter 14.2 und Spindel 14.1 mechanisch gegeneinander verspannt. Infolge der mechanischen Verspannung bewegt die Buchse 14.3 die Spindel 14.1 aus der Spindelausgangsstellung 14.1* in die Spindelendstellung 14.1+ und komprimiert die Bremsfederelemente 12.3 (siehe Fig. 4a und 4b). Die Messeinheit 13 misst das vom Schraubwerkzeug 2 ausgeübte Drehmoment M und den Drehwinkel, um den sich die Prüfverbindungseinheit 11 um die Drehachse Z dreht.

In einem fünften Schritt nach Fig. 5 hat das Schraubwerkzeug 2 die eingestellte Sollgrösse S erreicht und deaktiviert die Drehbewegung der Prüfverbindungseinheit 11 um die Drehachse Z und die Ausübung des Drehmomentes M. Die Kupplung des Schraubwerkzeuges 2 mit dem Prüfverbindungselement 11.1 wird gelöst. Das Schraubwerkzeug 2 wird von der Simulationseinrichtung 1 entfernt. Das Halteelement 15.2 bleibt in der Haltestellung 15.2+ (siehe Fig. 2b). Die Mutter 14.2 bleibt in der Mutterendstellung 14.2+ (siehe Fig. 3b).

In einem sechsten Schritt nach Fig. 6 wird die Halteeinheit 15 deaktiviert und das Halteelement 15.2 wird vom Antrieb 15.1 aus der Haltestellung 15.2+ zurück in die Ruhestellung 15.2* bewegt. Die Mutter 14.2 ist nicht mehr im formschlüssigen Halt H. Ohne den formschlüssigen Halt H dekomprimiert das Rückstellfederelement 14.4 und bewegt die Mutter 14.2 mit der Rückstellfederkraft RR entlang der Drehachse Z in die Mutterausgangsstellung 14.2+ (siehe Fig. 5 und 6). Ohne den formschlüssigen Halt H löst sich die reibschlüssige Anlage der Bremslamellenelemente 12.1 und bewegt den Bremskolben 12.2 entlang der Drehachse Z von den Bremslamellenelementen 12.1 weg (siehe Fig. 5 und 6). Gleichzeitig dekomprimieren die Bremsfederelemente 12.3, was in einer Federkraft R resultiert. Durch die Federkraft R bewegen sich die Buchse 14.3 und die Spindel 14.1 aus der Spindelendstellung 14.1+ längs der Drehachse Z zurück in die Spindelausgangsstellung 14.1*, welche die Buchse 14.3 und die Spindel 14.1 in der Darstellung nach Fig. 6 erreichen.

### Bezugszeichenliste

- 1: Simulationseinrichtung
- 2: Schraubwerkzeug
- 10.1: Gehäuseoberteil
- 10.2: Gehäuseboden
- 11: Prüfverbindungseinheit
- 11.1: Prüfverbindungselement
- 11.2: Drehkörper
- 12: Bremseinheit
- 12.1: Bremslamellenelemente
- 12.2: Bremskolben
- 12.3: Bremsfederelemente
- 13: Messeinheit
- 14: Wandlereinheit
- 14.1: Spindel
- 14.1*: Spindelausgangsstellung
- 14.1+: Spindelendstellung
- 14.11: weitere mechanische Verbindung
- 14.12: Spindelkontaktfläche
- 14.2: Mutter
- 14.2*: Mutterausgangsstellung
- 14.2+: Mutterendstellung
- 14.21: Druckhülse
- 14.3: Buchse
- 14.31: mechanische Verbindung
- 14.4: Rückstellfederelement
- 14.5: Wälzelemente
- 15: Halteeinheit
- 15.1: Antrieb
- 15.2: Halteelement
- 15.2*: Ruhestellung
- 15.2+: Haltestellung
- Δx: Stellweg
- Δz1: Mutterhub
- Δz2: Buchsenhub
- F: Bremskraft
- H: formschlüssiger Halt
- M: Drehmoment
- R: Federkraft
- RR: Rückstellfederkraft
- S: Sollgrösse
- X: Radialachse
- Z: Drehachse

## Patentansprüche

1. Simulationseinrichtung (1) für die Schraubfallsimulation eines Schraubwerkzeuges (2);
mit einer Prüfverbindungseinheit (11), über welche das Schraubwerkzeug (2) mit der Simulationseinrichtung (1) kuppelbar ist, wobei das Schraubwerkzeug (2) aktivierbar ist und im aktivierten und mit der Prüfverbindungseinheit (11) gekuppelten Zustand die Prüfverbindungseinheit (11) um eine Drehachse (Z) dreht und ein Drehmoment (M) auf die Prüfverbindungseinheit (11) ausübt;
mit einer Messeinheit (13) zum Messen des vom Schraubwerkzeuges (2) im aktivierten und mit der Prüfverbindungseinheit (11) gekuppelten Zustand auf die Prüfverbindungseinheit (11) ausgeübten Drehmomentes (M) und zum Messen des Drehwinkels, um den sich die Prüfverbindungseinheit (11) durch das aktivierte Schraubwerkzeug (2) im gekuppelten Zustand um die Drehachse (Z) dreht; und
mit einer Bremseinheit (12) zum Abbremsen des vom Schraubwerkzeug (2) im aktivierten und mit der Prüfverbindungseinheit (11) gekuppelten Zustand auf die Prüfverbindungseinheit (11) ausgeübten Drehmomentes (M);
wobei die Simulationseinrichtung (1) eine Wandlereinheit (14) aufweist, welche Wandlereinheit (14) mechanisch mit der Prüfverbindungseinheit (11) verbunden ist, welche Wandlereinheit (14) das vom Schraubwerkzeug (2) im aktivierten und mit der Prüfverbindungseinheit (11) gekuppelten Zustand auf die Prüfverbindungseinheit (11) ausgeübte Drehmoment (M) aufnimmt und in eine Bremskraft (F) wandelt und mit der Bremskraft (F) die Bremseinheit (12) beaufschlagt; **dadurch gekennzeichnet,**
**dass** die Wandlereinheit (14) eine Spindel (14.1) und eine Mutter (14.2) aufweist, welche Spindel (14.1) und welche Mutter (14.2) über einen Formschluss miteinander verbunden sind, welcher Formschluss eine Drehbewegung der Spindel (14.1) um die Drehachse (Z) in eine Längsbewegung der Mutter (14.2) entlang der Drehachse (Z) überträgt; dass die entlang der Drehachse (Z) bewegte Mutter (14.2) ein vom Schraubwerkzeug (2) im aktivierten und mit der Prüfverbindungseinheit (11) gekuppelten Zustand auf die Prüfverbindungseinheit (11) ausgeübtes Drehmoment (M) in eine Bremskraft (F) wandelt und die Bremseinheit (12) mit der Bremskraft (F) beaufschlagt; dass die Wandlereinheit (14) Wälzelemente (14.5) aufweist; dass die Spindel (14.1) eine Gewindespindel ist; dass die Mutter (14.2) eine Gewindemutter ist; dass die Wälzelemente (14.5) den Formschluss zwischen der Gewindespindel (14.1) und der Gewindemutter (14.2) bilden; und dass die Wälzelemente (14.5) die Drehbewegung der Gewindespindel (14.1) um die Drehachse (Z) in die Längsbewegung der Gewindemutter (14.2) entlang der Drehachse (Z) übertragen.

2. Simulationseinrichtung (1) nach Anspruch 1, **dadurch gekennzeichnet, dass** die Simulationseinrichtung (1) eine Halteeinheit (15) aufweist, welche Halteeinheit (15) aktivierbar ist; und dass die aktivierte Halteeinheit (15) die Mutter (14.2) in einem formschlüssigen Halt (H) hält, welcher formschlüssig Halt (H) nur eine Längsbewegung der Mutter (14.2) aus einer Mutterausgangsstellung (14.2*) entlang der Drehachse (Z) in Richtung hin zum Schraubwerkzeug (2) in eine Mutterendstellung (14.2+) zulässt.

3. Simulationseinrichtung (1) nach Anspruch 2, **dadurch gekennzeichnet, dass** die die Bremseinheit (12) mehrere Bremslamellenelemente (12.1) und einen Bremskolben (12.2) aufweist; dass die in die Mutterendstellung (14.2+) längsbewegte Mutter (14.2) den Bremskolben (12.2) mit der Bremskraft (F) beaufschlagt; und dass der mit der Bremskraft (F) beaufschlagte Bremskolben (12.2) die Bremslamellenelemente (12.1) zu einer reibschlüssigen Anlage bringt.

4. Simulationseinrichtung (1) nach einem der Ansprüche 2 oder 3, **dadurch gekennzeichnet, dass** die Wandlereinheit (14) ein Rückstellfederelement (14.4) aufweist; und dass die in die Mutterendstellung (14.2+) längsbewegte Mutter (14.2) das Rückstellfederelement (14.4) komprimiert.

5. Simulationseinrichtung (1) nach einem der Ansprüche 2 bis 4, **dadurch gekennzeichnet, dass** die in die Mutterendstellung (14.2+) längsbewegte Mutter (14.2) und die Spindel (14.1) bei einer Drehbewegung der Spindel (14.1) um die Drehachse (Z) sich gegeneinander verspannen und sich die Spindel (14.1) aus einer Spindelausgangsstellung (14.1*) entlang der Drehachse (Z) in eine Spindelendstellung (14.1+) längsbewegt; dass die Bremseinheit (12) mehrere Bremsfederelemente (12.3) aufweist; und dass die entlang der Drehachse (Z) in die Spindelendstellung (14.1+) längsbewegte Spindel (14.1) die Bremsfederelemente (12.3) komprimiert.

6. Simulationseinrichtung (1) nach Anspruch 5, **dadurch gekennzeichnet, dass** die Bremsfederelemente (12.3) in einem Gehäusetopf (10.2) angeordnet sind; dass in Abhängigkeit des vom aktivierten Schraubwerkzeug (2) bis zu einem vordefinierten Solldrehmoment und/oder Solldrehwinkel ausgeübten Drehmomentes (M) unterschiedliche viele Bremsfederelemente (12.3) im Gehäusetopf (10.2) angeordnet sind; und/oder dass in Abhängigkeit des vom aktivierten Schraubwerkzeug (2) bis zu einem vordefinierten Solldrehmoment und/oder Solldrehwinkel ausgeübten Drehmomentes (M) unterschiedlich steife Bremsfederelemente (12.3) im Gehäusetopf (10.2) angeordnet sind.

7. Simulationseinrichtung (1) nach einem der Ansprüche 5 oder 6, **dadurch gekennzeichnet, dass** die Bremsfederelemente (12.3) in einem Gehäusetopf (10.2) angeordnet sind; und dass der Gehäusetopf (10.2) über einen Schnellverschluss zu öffnen ist und die Bremsfederelemente (12.3) im geöffneten Gehäusetopf (10.2) auswechselbar sind.

8. Verfahren zur Durchführung einer Schraubfallsimulation eines Schraubwerkzeuges (2) unter Verwendung der Simulationseinrichtung (1) nach einem der Ansprüche 1 bis 7,
**gekennzeichnet durch** die folgenden Schritte, **dass** in einem ersten Schritt das Schraubwerkzeug (2) über die Prüfverbindungseinheit (11) mit der Simulationseinrichtung (1) gekuppelt wird;
dass in einem zweiten Schritt das Schraubwerkzeug (2) aktiviert wird, welches aktivierte Schraubwerkzeug (2) die Prüfverbindungseinheit (11) um die Drehachse (Z) dreht und ein Drehmoment (M) auf die Prüfverbindungseinheit (11) ausübt;
dass in einem dritten Schritt von der Wandlereinheit (14) das vom Schraubwerkzeug (2) ausgeübte Drehmoment (M) aufgenommen wird und in eine Bremskraft (F) gewandelt wird;
und
dass im dritten Schritt die Bremseinheit (12) von der Wandlereinheit (14) mit der Bremskraft (F) beaufschlagt wird.

9. Verfahren nach Anspruch 8, **dadurch gekennzeichnet, dass** die Wandlereinheit (14) eine Spindel (14.1) und eine Mutter (14.2) aufweist, welche Spindel (14.1) und welche Mutter (14.2) über einen Formschluss miteinander verbunden sind, und im dritten Schritt durch den Formschluss eine Drehbewegung der Spindel (14.1) um die Drehachse (Z) in eine Längsbewegung der Mutter (14.2) aus einer Mutterausgangsstellung (14.2*) entlang der Drehachse (Z) in eine Mutterendstellung (14.2+) übertragen wird; und dass im dritten Schritt von der in die Mutterendstellung (14.2+) längsbewegten Mutter (14.2) das vom Schraubwerkzeug (2) ausgeübte Drehmoment (M) in die Bremskraft (F) gewandelt wird.

10. Verfahren nach Anspruch 9, **dadurch gekennzeichnet, dass** die Simulationseinrichtung (1) eine Halteeinheit (15) aufweist, welche Halteeinheit (15) im zweiten Schritt aktiviert wird; dass die Mutter (14.2) von der aktivierte Halteeinheit (15) im formschlüssigen Halt (H) gehalten wird, welcher formschlüssige Halt (H) nur eine Längsbewegung der Mutter (14.2) aus der Mutterausgangsstellung (14.2*) entlang der Drehachse (Z) in Richtung hin zum Schraubwerkzeug (2) in die Mutterendstellung (14.2+) zulässt.

11. Verfahren nach Anspruch 10,
**12, dadurch gekennzeichnet, dass**
die Bremseinheit (12) mehrere Bremslamellenelemente (12.1) und einen Bremskolben (12.2) aufweist, und im dritten Schritt der Bremskolben (12.2) von der in die Mutterendstellung (14.2+) längsbewegten Mutter (14.2) mit der Bremskraft (F) beaufschlagt wird; und dass im dritten Schritt der mit der Bremskraft (F) beaufschlagte Bremskolben (12.2) die Bremslamellenelemente (12.1) zu einer reibschlüssigen Anlage bringt.

12. Verfahren nach einem der Ansprüche 10 oder 11, **dadurch gekennzeichnet, dass** die Wandlereinheit (14) ein Rückstellfederelement (14.4) aufweist, welches Rückstellfederelement (14.4)) im dritten Schritt von der in die Mutterendstellung (14.2+) längsbewegten Mutter (14.2) komprimiert wird; dass in einem sechsten Schritt die Halteeinheit (15) deaktiviert wird, von welcher deaktivierten Halteeinheit (15) die Mutter (14.2) nicht mehr im formschlüssigen Halt (H) gehalten wird; dass ohne formschlüssigen Halt (H) der Mutter (14.2) das komprimierte Rückstellfederelement (14.4) dekomprimiert und vom dekomprimierten Rückstellfederelement (14.4) eine Rückstellfederkraft (RR) auf die Mutter (14.2) ausgeübt wird; und dass im sechsten Schritt die Mutter (14.2) von der Rückstellfederkraft (RR) aus der Mutterendstellung (14.2+) längs der Drehachse (Z) in die Mutterausgangsstellung (14.2*) bewegt wird.

13. Verfahren nach einem der Ansprüche 10 bis 12, **dadurch gekennzeichnet, dass** die in die Mutterendstellung (14.2+) längsbewegte Mutter (14.2) und die Spindel (14.1) bei einer Drehbewegung der Spindel (14.1) um die Drehachse (Z) gegeneinander verspannt werden und die Spindel (14.1) aus einer Spindelausgangsstellung (14.1) entlang der Drehachse (Z) in eine Spindelendstellung (14.1+) längsbewegt wird; dass die Bremseinheit (12) mehrere Bremsfederelemente (12.3) aufweist; und dass die in die Spindelendstellung (14.1+) längsbewegte Spindel (14.1) die Bremsfederelemente (12.3) komprimiert; dass in einem sechsten Schritt das Schraubwerkzeug (2) deaktiviert wird und vom deaktivierten Schraubwerkzeug (2) kein Drehmoment (M) mehr ausgeübt wird; dass ohne formschlüssigen Halt (H) der Mutter (14.2) die Bremsfederelemente (12.3) dekomprimieren und von den dekomprimierten Federelementen (12.3) eine Federkraft (R) ausgeübt wird; und dass im sechsten Schritt die Spindel (14.1) von der Federkraft (R) aus der Spindelendstellung (14.1+) längs der Drehachse (Z) in die Spindelausgangsstellung (14.1*) bewegt wird.

## Claims

1. A simulation device (1) for the screw joint simulation of a screw-driving tool (2);
comprising a test connecting unit (11) by which the screw-driving tool (2) can be coupled to the simulation device (1), wherein said screw-driving tool (2) can be activated and, in the activated state and coupled to the test connecting unit (11), rotates the test connecting unit (11) about an axis of rotation (Z) and exerts a torque (M) onto the test connecting unit (11);
comprising a measuring unit (13) for measuring the torque (M) that the screw-driving tool (2) in the activated state and coupled to the test connecting unit (11) exerts onto said test connecting unit (11) and for measuring the angle of rotation by which the test connecting unit (11) is rotated about the axis of rotation (Z) by the activated screw-driving tool (2) in the coupled state; and
comprising a brake unit (12) for slowing down the torque (M) that the screw-driving tool (2) in the activated state and coupled to the test connecting unit (11) exerts onto the test connecting unit (11);
wherein said simulation device (1) comprises a converter unit (14), which converter unit (14) is mechanically connected to the test connecting unit (11), which converter unit (14) captures the torque (M) that the screw-driving tool (2) in the activated state and coupled to the test connecting unit (11) exerts onto the test connecting unit (11) and converts said torque into a braking force (F) and applies the braking force (F) to the brake unit (12);
**characterized in that** said converter unit (14) comprises a spindle (14.1) and a nut (14.2), which spindle (14.1) and which nut (14.2) are connected to one another via a form fit, by which form fit a rotational movement of the spindle (14.1) about the axis of rotation (Z) is converted into a longitudinal movement of the nut (14. 2) along the axis of rotation (Z); and **in that** said nut (14.2) that is moved along the axis of rotation (Z) converts a torque (M) that the screw-driving tool (2) in the activated state and coupled to the test connecting unit (11) exerts onto the test connecting unit (11) into a braking force (F) and applies the braking force (F) to the brake unit (12);
**in that** said converter unit (14) comprises rolling elements (14.5); **in that** the spindle (14.1) is a threaded spindle; **in that** the nut (14.2) is a threaded nut; **in that** the rolling elements (14.5) generate the form fit between the threaded spindle (14.1) and the threaded nut (14.2); and **in that** the rolling elements (14.5) converts the rotational movement of the threaded spindle (14.1) about the axis of rotation (Z) in the longitudinal movement of the threaded nut (14.2) along the axis of rotation (Z).

2. The simulation device (1) according to claim 1, **characterized in that** said simulation device (1) comprises a retaining unit (15), which retaining unit (15) can be activated; and **in that** the activated retaining unit (15) holds (H) the nut (14.2) by means of a form fit, which holding (H) by form fit permits only a longitudinal movement of the nut (14.2) from a nut starting position (14.2*) into a nut end position (14.2+) along the axis of rotation (Z) in the direction towards the screw-driving tool (2).

3. The simulation device (1) according to claim 2, **characterized in that** the brake unit (12) comprises a plurality of brake plate elements (12.1) and a brake piston (12.2); **in that** the nut which is moved in a longitudinal direction into the nut end position (14.2+) applies the braking force (F) to the brake piston (12.2); and **in that** the brake piston (12.2) on which the braking force (F) is applied brings about frictional engagement of the brake plate elements (12.1) with each other.

4. The simulation device (1) according to any of the claims 2 or 3, **characterized in that** the converter unit (14) comprises a return spring element (14.4); and **in that** the nut (14.2) which is moved in a longitudinal direction into the nut end position (14.2+) compresses the return spring element (14.4).

5. The simulation device (1) according to any of the claims 2 to 4, **characterized in that** the nut (14.2) which is moved in a longitudinal direction into the nut end position (14.2+) and the spindle (14.1) are loaded against each other during a rotational movement of the spindle (14.1) about the axis of rotation (Z), and the spindle (14.1) moves in a longitudinal direction along the axis of rotation (Z) from a spindle starting position (14.1*) into a spindle end position (14.1+); **in that** the brake unit (12) comprises a plurality of brake spring elements (12.3); and **in that** the spindle (14.1) which is moved in a longitudinal direction along the axis of rotation (Z) into the spindle end position (14.1+) compresses the brake spring elements (12.3).

6. The simulation device (1) according to claim 5, **characterized in that** said brake spring elements (12.3) are arranged in a housing pot (10.2); **in that** the number of brake spring elements (12.3) arranged in the housing pot (10.2) varies depending on the torque (M) to be exerted by the activated screw-driving tool (2) up to a predefined nominal torque and/or nominal angle of rotation; and/or **in that** the stiffness of the brake spring elements (12.3) arranged in the housing pot (10.2) varies depending on the torque (M) to be exerted by the activated screw-driving tool (2) up to a predefined nominal torque and/or nominal angle of rotation.

7. The simulation device (1) according to any of the claims 5 or 6, **characterized in that** said brake spring elements (12.3) are arranged in a housing pot (10.2); and **in that** the housing pot (10.2) can be opened by means of a quick-release mechanism and that in the opened housing pot (10.2) the brake spring elements (12.3) can be replaced.

8. A method for carrying out a screw joint simulation of a screw-driving tool (2) using the simulation device (1) according to any of the claims 1 to 7,
**characterized by** the following steps **that**
in a first step, the screw-driving tool (2) is coupled to the simulation device (1) via the test connecting unit (11);
in that, in a second step, the screw-driving tool (2) is activated, which activated screw-driving tool (2) rotates the test connecting unit (11) about the axis of rotation (Z) and exerts a torque (M) onto the test connecting unit (11) ;
in that, in a third step, the torque (M) exerted by the screw-driving tool (2) is captured by the converter unit (14) and is converted into a braking force (F);
in that said converter unit (14) comprises a spindle (14.1) and a nut (14.2), which spindle (14.1) and which nut (14.2) are connected to one another via a form fit, by which form fit a rotational movement of the spindle (14.1) about the axis of rotation (Z) is converted into a longitudinal movement of the nut (14. 2) along the axis of rotation (Z); and in that said nut (14.2) that is moved along the axis of rotation (Z) converts a torque (M) that the screw-driving tool (2) in the activated state and coupled to the test connecting unit (11) exerts onto the test connecting unit (11) into a braking force (F) and applies the braking force (F) to the brake unit (12);
in that said converter unit (14) comprises rolling elements (14.5); in that the spindle (14.1) is a threaded spindle; in that the nut (14.2) is a threaded nut; in that the rolling elements (14.5) generate the form fit between the threaded spindle (14.1) and the threaded nut (14.2); and in that the rolling elements (14.5) converts the rotational movement of the threaded spindle (14.1) about the axis of rotation (Z) in the longitudinal movement of the threaded nut (14.2) along the axis of rotation (Z); and
in that, in said third step, the braking force (F) is applied to the brake unit (12) by the converter unit (14).

9. The method according to claim 8, **characterized in that** the converter unit (14) comprises a spindle (14.1) and a nut (14.2), which spindle (14.1) and which nut (14.2) are connected to each other via a form fit, and that in said third step due to said form fit a rotational movement of the spindle (14.1) about the axis of rotation (Z) is converted into a longitudinal movement of the nut (14.2) from a nut starting position (14.2*) into a nut end position (14.2+) along the axis of rotation (Z); and **in that** in said third step the torque (M) exerted by the screw-driving tool (2) is converted into the braking force (F) by the nut (14.2) that is moved in a longitudinal direction into the nut end position (14.2+).

10. The method according to claim 9, **characterized in that** the simulation device (1) comprises a retaining unit (15), which retaining unit (15) is activated in said second step; **in that** the nut (14.2) is held (H) by a form fit by the activated retaining unit (15), which holding (H) by form fit permits only a longitudinal movement of the nut (14.2) from the nut starting position (14.2*) into the nut end position (14.2+) along the axis of rotation (Z) in the direction towards the screw-driving tool (2).

11. The method according to claim 10, **characterized in that** the brake unit (12) comprises a plurality of brake plate elements (12.1) and a brake piston (12.2), and that in said third step the nut (14.2) that is moved in a longitudinal direction into the nut end position (14.2+) applies the brake force (F) to the brake piston (12.2); and **in that** in said third step the brake piston (12.2) to which the brake force (F) is applied brings about frictional engagement of the brake plate elements (12.1) with each other.

12. The method according to any of the claims 10 or 11, **characterized in that** the converter unit (14) comprises a return spring element (14.4), which return spring element (14.4) is compressed in said third step by the nut (14.2) that is moved in a longitudinal direction into the nut end position (14.2+); **in that** in a sixth step the retaining unit (15) is deactivated, which deactivated retaining unit (15) no longer holds (H) said nut (14.2) by form fit; **in that** in the absence of said holding (H) of the nut (14.2) by form fit the compressed return spring element (14.4) is decompressed and a return spring force (RR) generated by said decompressed return spring element (14.4) is exerted onto the nut (14.2); and **in that** in said sixth step the nut (14.2) is moved by said return spring force (RR) from the nut end position (14.2+) into the nut starting position (14.2*) along the axis of rotation (Z).

13. The method according to any of the claims 10 to 12, **characterized in that** the nut (14.2) that is moved in a longitudinal direction into the nut end position (14.2+) and the spindle (14.1) are loaded against each other during rotational movement of the spindle (14.1) about the axis of rotation (Z), and the spindle (14.1) is moved in a longitudinal direction from a spindle starting position (14.1) into a spindle end position (14.1+) along the axis of rotation (Z); **in that** the brake unit (12) comprises a plurality of brake spring elements (12.3); and **in that** the spindle (14.1) compresses said brake spring elements (12.3); **in that** in a sixth step the screw-driving tool (2) is deactivated and no more torque (M) is exerted by the deactivated screw-driving tool (2); **in that** in the absence of said holding (H) of the nut (14.2) by form fit the brake spring elements (12.3) decompress and the decompressed spring elements (12.3) exert a spring force (R); and **in that** in said sixth step the spindle (14.1) is moved by said spring force (R) from the spindle end position (14.1+) into the spindle output position (14.1*) along the axis of rotation (Z).

## Revendications

1. Dispositif de simulation (1) pour simuler le cas de vissage d'un outil de vissage (2); comprenant une unité de raccordement pour essai (11) par laquelle l'outil de vissage (2) peut être couplé au dispositif de simulation (1), dans lequel ledit outil de vissage (2) peut être activé et, dans l'état activé et couplé à l'unité de raccordement pour essai (11), fait tourner l'unité de raccordement pour essai (11) autour d'un axe de rotation (Z) et exerce un couple (M) sur l'unité de raccordement pour essai (11); comprenant une unité de mesure (13) pour mesurer le couple (M) exercé sur ladite unité de raccordement pour essai (11) par l'outil de vissage (2) dans l'état activé et couplé à l'unité de raccordement pour essai (11), et pour mesurer l'angle de rotation selon lequel l'unité de raccordement pour essai (11) est tournée autour de l'axe de rotation (Z) par l'outil de vissage (2) activé à l'état couplé; et comprenant une unité de freinage (12) pour freiner le couple (M) exercé sur l'unité de raccordement pour essai (11) par l'outil de vissage (2) à l'état activé et couplé à l'unité de raccordement pour essai (11); en ce que le dispositif de simulation (1) comprend une unité de transducteur (14), laquelle unité de transducteur (14) est reliée mécaniquement à l'unité de raccordement pour essai (11), laquelle unité de transducteur (14) reçoit le couple (M) exercé par l'outil de vissage (2) à l'état activé et couplé à l'unité de raccordement pour essai (11) sur l'unité de raccordement pour essai (11) et le convertit en une force de freinage (F) et applique ladite force de freinage (F) à l'unité de freinage (12) ; **caractérisé en ce que** l'unité de transducteur (14) comprend une broche (14.1) et un écrou (14.2), ladite broche (14.1) et ledit écrou (14.2) étant reliés l'un à l'autre par une compatibilité des formes, laquelle compatibilité des formes convertit un mouvement de rotation de la broche (14.1) autour de l'axe de rotation (Z) en un mouvement longitudinal de l'écrou (14.2) le long de l'axe de rotation (Z) ; **en ce que** l'écrou (14.2) déplacé le long de l'axe de rotation (Z) convertit un couple (M) exercé sur l'unité de raccordement pour essai (11) par l'outil de vissage (2) à l'état activé et couplé à l'unité de raccordement pour essai (11) en une force de freinage (F) et applique la force de freinage (F) à l'unité de freinage (12) ; **en ce que** l'unité de transducteur (14) comprend des éléments roulants (14.5) ; **en ce que** la broche (14.1) est une broche filetée ; **en ce que** l'écrou (14.2) est un écrou fileté ; **en ce que** les éléments roulants (14.5) forment la compatibilité des formes entre la broche filetée (14.1) et l'écrou fileté (14.2) ; et **en ce que** les éléments roulants (14.5) convertissent le mouvement de rotation de la broche filetée (14.1) autour de l'axe de rotation (Z) en le mouvement longitudinal de l'écrou fileté (14.2) le long de l'axe de rotation (Z).

2. Dispositif de simulation (1) selon la revendication 1, **caractérisé en ce que** le dispositif de simulation (1) comprend une unité de retenue (15), laquelle unité de retenue (15) peut être activée ; et **en ce que** l'unité de retenue (15) activée retient l'écrou (14.2) par compatibilité des formes (H), et le fait qu'il est retenu par compatibilité des formes (H) ne permet qu'un mouvement longitudinal de l'écrou (14.2) à partir d'une position de départ de l'écrou (14.2*) le long de l'axe de rotation (Z) en direction vers l'outil de vissage (2) jusqu'à une position finale de l'écrou (14.2+).

3. Dispositif de simulation (1) selon la revendication 2, **caractérisé en ce que** l'unité de freinage (12) comprend une pluralité d'éléments de disque de frein (12.1) et un piston de frein (12.2) ; **en ce que** l'écrou déplacé longitudinalement dans la position finale de l'écrou (14.2+) applique la force de freinage (F) au piston de frein (12.2) ; et **en ce que** le piston de frein (12.2) sur lequel la force de freinage (F) est appliquée amène les éléments de disque de frein (12.1) en contact par friction.

4. Dispositif de simulation (1) selon l'une quelconque des revendications 2 ou 3, **caractérisé en ce que** l'unité de transducteur (14) comprend un élément de ressort de rappel (14.4) ; et **en ce que** l'écrou (14.2) déplacé longitudinalement jusqu'à la position finale de l'écrou (14.2+) comprime l'élément de ressort de rappel (14.4).

5. Dispositif de simulation (1) selon l'une quelconque des revendications 2 à 4, **caractérisé en ce que,** pendant un mouvement de rotation de la broche (14.1) autour de l'axe de rotation (Z), l'écrou (14.2) déplacé longitudinalement dans la position finale de l'écrou (14.2+) et la broche (14.1) se serrent l'un contre l'autre et la broche (14.1) se déplace longitudinalement à partir d'une position de départ de la broche (14.1*) le long de l'axe de rotation (Z) jusqu'à une position finale de la broche (14.1+) ; **en ce que** l'unité de freinage (12) comprend une pluralité d'éléments de ressort de freinage (12.3) ; et **en ce que** la broche (14.1) déplacée longitudinalement le long de l'axe de rotation (Z) jusqu'à la position finale de la broche (14.1+) comprime les éléments de ressort de freinage (12.3).

6. Dispositif de simulation (1) selon la revendication 5, **caractérisé en ce que** les éléments de ressort de freinage (12.3) sont disposés dans un pot de boîtier (10.2) ; **en ce que**, en fonction du couple (M) exercé par l'outil de vissage (2) activé jusqu'à un couple nominal et/ou un angle de rotation nominal prédéfinis, un nombre variable d'éléments de ressort de freinage (12.3) sont disposés dans le pot de boîtier (10.2) ; et/ou **en ce que**, en fonction du couple (M) exercé par l'outil de vissage (2) activé jusqu'à un couple nominal et/ou un angle de rotation nominal prédéfinis, des éléments de ressort de freinage (12.3) de rigidité différente sont disposés dans le pot de boîtier (10.2).

7. Dispositif de simulation (1) selon l'une quelconque des revendications 5 ou 6, **caractérisé en ce que** les éléments de ressort de freinage (12.3) sont disposés dans un pot de boîtier (10.2) ; et **en ce que** le pot de boîtier (10.2) peut être ouvert au moyen d'une fermeture rapide et les éléments de ressort de freinage (12.3) peuvent être remplacés dans le pot de boîtier (10.2) ouvert.

8. Procédé pour réaliser une simulation du cas de vissage d'un outil de vissage (2) en utilisant le dispositif de simulation (1) selon l'une quelconque des revendications 1 à 7, **caractérisé par** les étapes suivantes dans lesquelles dans une première étape, on couplé l'outil de vissage (2) par l'intermédiaire de l'unité de raccordement pour essai (11) au dispositif de simulation (1); dans une deuxième étape, on active l'outil de vissage (2), ledit outil de vissage (2) activé fait tourner l'unité de raccordement pour essai (11) autour de l'axe de rotation (Z) et exerce un couple (M) sur l'unité de raccordement pour essai (11); dans une troisième étape, le couple (M) exercé par l'outil de vissage (2) est reçu par l'unité de transducteur (14) et converti en une force de freinage (F); et en ce que dans la troisième étape, la force de freinage (F) est appliquée à l'unité de freinage (12) par l'unité de transducteur (14).

9. Procédé selon la revendication 8, **caractérisé en ce que** l'unité de transducteur (14) comprend une broche (14.1) et un écrou (14.2), ladite broche (14.1) et ledit écrou (14.2) étant reliés l'un à l'autre par compatibilité des formes, et **en ce que** dans la troisième étape, du fait de la compatibilité des formes, un mouvement de rotation de la broche (14.1) autour de l'axe de rotation (Z) est converti en un mouvement longitudinal de l'écrou (14.2) d'une position de départ de l'écrou (14.2*) le long de l'axe de rotation (Z) jusqu'à une position finale de l'écrou (14.2+) ; et **en ce que** dans la troisième étape, l'écrou (14.2) déplacé longitudinalement dans la position finale de l'écrou (14.2+) convertit le couple (M) exercé par l'outil de vissage (2) en la force de freinage (F).

10. Procédé selon la revendication 9, **caractérisé en ce que** le dispositif de simulation (1) comprend une unité de retenue (15), laquelle unité de retenue (15) est activée dans la deuxième étape ; **en ce que** l'écrou (14.2) est retenu par l'unité de retenue (15) activée par une compatibilité des formes (H), le fait qu'il est retenu par compatibilité des formes (H) ne permet qu'un mouvement longitudinal de l'écrou (14.2) à partir de la position de départ de l'écrou (14.2*) le long de l'axe de rotation (Z) en direction vers l'outil de vissage (2) jusqu'à la position finale de l'écrou (14.2+).

11. Le procédé selon la revendication 10, **caractérisé en ce que** l'unité de freinage (12) comprend une pluralité d'éléments de disque de frein (12.1) et un piston de frein (12.2), et **en ce que** dans la troisième étape, la force de freinage (F) est appliquée sur le piston de frein (12.2) par l'écrou (14.2) déplacé longitudinalement dans la position finale de l'écrou (14.2+) ; et **en ce que** dans la troisième étape, le piston de frein (12.2) sur lequel la force de freinage (F) est appliquée amène les éléments de disque de frein (12.1) en contact par friction.

12. Procédé selon l'une quelconque des revendications 10 ou 11, **caractérisé en ce que** l'unité de transducteur (14) comprend un élément de ressort de rappel (14.4), lequel élément de ressort de rappel (14.4) est comprimé dans la troisième étape par l'écrou (14.2) déplacé longitudinalement dans la position finale de l'écrou (14.2+) ; **en ce que**, dans une sixième étape, l'unité de retenue (15) est désactivée et l'écrou (14.2) n'est plus retenu par compatibilité des formes (H) par l'unité de retenue (15) désactivée ; **en ce que**, à cause du fait que l'écrou (14.2) n'est plus retenu par compatibilité des formes (H), l'élément de ressort de rappel (14.4) comprimé est décomprimé et une force de ressort de rappel (RR) est exercée par l'élément de ressort de rappel (14.4) décomprimé sur l'écrou (14.2) ; et **en ce que** dans la sixième étape, l'écrou (14.2) est déplacé de la position finale de l'écrou (14.2+) le long de l'axe de rotation (Z) jusqu'à la position de départ de l'écrou (14.2*) par ladite force du ressort de rappel (RR).

13. Procédé selon l'une quelconque des revendications 10 à 12, **caractérisé en ce que,** pendant un mouvement de rotation de la broche (14.1) autour de l'axe de rotation (Z), l'écrou (14.2) déplacé longitudinalement dans la position finale de l'écrou (14.2+) et la broche (14.1) sont serrés l'un contre l'autre et la broche (14.1) est déplacée longitudinalement le long de l'axe de rotation (Z) d'une position de départ de la broche (14.1) jusqu'à une position finale de la broche (14.1+) ; **en ce que** l'unité de freinage (12) comporte une pluralité d'éléments de ressort de freinage (12.3) ; et **en ce que** la broche (14.1) déplacée longitudinalement dans la position finale de la broche (14.1+) comprime les éléments de ressort de freinage (12.3) ; **en ce que** dans une sixième étape, l'outil de vissage (2) est désactivé et l'outil de vissage (2) désactivé ne produit plus de couple (M) ; **en ce que**, à cause du fait que l'écrou (14.2) n'est plus retenu par compatibilité des formes (H), les éléments de ressort de freinage (12.3) se décompressent et une force de ressort (R) est exercée par les éléments de ressort (12.3) décomprimés ; et **en ce que** dans la sixième étape, la broche (14.1) est déplacée le long de l'axe de rotation (Z) de la position finale de la broche (14.1+) jusqu'à la position de départ de la broche (14.1*) par ladite force de ressort (R).
